# EUROPÄISCHE PATENTSCHRIFT

(11) **EP 0 422 335 B1**
(45) Veröffentlichungstag und Bekanntmachung des Hinweises auf die Patenterteilung: **04.09.1996**
(21) Anmeldenummer: 90111046.0
(22) Anmeldetag: 12.06.1990
(51) Int. Cl.: C08L 27/06, C08K 13/06

(54) **Weichmacherfreie Formmasse auf der Basis von Polyvinylchlorid**
Plasticizer-free moulding mass based on polyvinylchloride
Masse de moulage sans plastifiant à base de chlorure de vinyle

(30) Priorität: 23.08.1989 DE 3927777
(43) Veröffentlichungstag der Anmeldung: 17.04.1991
(73) Patentinhaber: Deutsche Solvay-Werke Gesellschaft mit beschränkter Haftung, 30173 Hannover (DE)
(72) Erfinder: Walz, Peter, Dr., F-92210 Saint Claude (FR); van Cleemputte, Willy, D-4650 Gelsenkirchen (DE); Baumgärtel, Hans-Georg, Dr., D-4134 Rheinberg (DE)
(74) Vertreter: Lauer, Dieter, Dr.

(56) Entgegenhaltungen:
- EP-A- 0 051 334

## Beschreibung

Die vorliegende Erfindung betrifft eine weichmacherfreie Formmasse auf der Basis von Polyvinylchlorid, enthaltend einen Kunststoff aus Vinylchloridhomo-, -co- und/oder -terpolymerisat Mischungen davon oder Legierungen damit mit PVC-gehalt von mehr als 70Gew.-%, vorzugsweise mehr als 85 Gew.-%, und 15 bis 0Gew.-% mindestens eines schlagzähmodifizierenden Polymerisates, ausgewählt aus der Gruppe der Poly-alkylacrylate, chlorierten Polyäthylene, Äthylen-Vinylacetat-Co- oder Äthylen-Vinylacetat-Kohlenmonoxid-Terpolymerisat und weitere Zusatzstoffe, Verarbeitungshilfsmittel und dgl. Gemäß der Erfindung enthält die Kunststofformmasse auf der Basis von Polyvinylchlorid bestimmte Gew.-Teile mindestens eines Costabilisators, oberflächenbehandelten Erdalkalioxids und/oder teilhydratisierten Erdalkalioxids und weitere Zusatzstoffe.

Die Erfindung betrifft weiterhin ein Verfahren zur Herstellung der Formmasse und die Verwendung derselben im Extrusionsverfahren.

Aus der EP-B-0 001 859 ist bereits eine starre, wärmestabilisierte Zusammensetzung auf der Basis von Vinylchloridpolymeren bekannt, die als Wärmestabilisatoren Magnesiumoxid und einen gesättigten mehrwertigen aliphatischen Alkohol, sowie Calcium- und Zinkstearat sowie weitere Verarbeitungshilfsmittel und Zusatzstoffe enthält. Diese wärmestabilisierten Zusammensetzungen sind besonders zur Herstellung von Rohren und Profilen geeignet. Sie weisen den Vorteil auf, daß sie blei- und cadmiumfrei sind. Die Wärmestabilität und Verarbeitungseigenschaften dieser Zusammensetzungen sind jedoch verbesserungswürdig.

Ziel und Aufgabe der vorliegenden Erfindung war es eine Formmasse mit verbesserten Eigenschaften und/oder verbesserten Verarbeitungseigenschaften und ein Verfahren zur Herstellung derselben zu finden und/oder die aus der Formmasse hergestellten Formteile sollten verbesserte Eigenschaften aufweisen. Insbesondere sollte eine verbesserte Wärmestabilität der Formmasse während der Verarbeitung erzielt werden. Darüber hinaus sollten zusätzlich blei- und cadmiumhaltige Stabilisatoren vermieden werden. Bei der Verarbeitung der Formmasse im Extruder sollte die Gefahr einer auftretenden Korrosion vermindert werden.

Erfindungsgemäß wurde festgestellt, daß diesen Zielen und Aufgaben eine weichmacherfreie Formmasse auf der Basis von Polyvinylchlorid gerecht wird, die einen Kunststoff Vinylchloridhomo-, -co- und/oder -terpolymerisat Mischungen davon oder Legierungen damit mit einem Vinylchlorid- oder PVC-gehalt von mehr als 70 Gew.-%, vorzugsweise mehr als 85 Gew.-%, und 15 bis 0 Gew.-% mindestens eines schlagzähmodifizierenden Polymerisates, ausgewählt aus der Gruppe der Polyalkylacrylate, chlorierten Polyäthylene, Äthylen-Vinylacetat-Co- oder Äthylen-Vinylacetat-Kohlenmonoxid-Terpolymerisat, enthält.

Je 100 Gew.-Teile dieser PVC-Mischung oder des Vinylchloridmischpolymerisates enthält die Formmasse
a. 0,01 bis 3 Gew.-Teile mindestens eines Calciumcarboxylates,
b. 0,01 bis 3 Gew.-Teile mindestens eines Zinkcarboxylates,
c. 0,01 bis 3 Gew.-Teile mindestens eines organischen Co-Stabilisators, ausgewählt aus der Gruppe mindestens eines β-Diketons, organischen Phosphits und/oder Dihydropyridins, gegebenenfalls Pigmente, Farbstoffe, Gleitmittel, Treibmittel, Flammschutzmittel, Füllstoffe, Verstärkungsfasern oder andere Verarbeitungshilfs- und Zusatzmittel,und erfindungsgemäß
d. 0,01 bis 5 Gew.-Teile mindestens eines Erdalkalioxides, eines Erdalkalihydroxides und/oder eines teilhydratisierten Erdalkalioxides, vorzugsweise Calciumoxid und/oder Magnesiumoxid, und/oder teilhydratisiertes Calciumoxid und/oder teilhydratisiertes Magnesiumoxid und/oder calcinierter Dolomit oder teilhydratisierter calcinierter Dolomit, wobei das Erdalkalioxid, Erdalkalihydroxid und/oder teilhydratisierte Erdalkalioxid, vorzugsweise das Calciumoxid und/oder Magnesiumoxid, und/oder das teilhydratisierte Calciumoxid und/oder teilhydratisierte Magnesiumoxid und/oder der calcinierte Dolomit oder der teilhydratisierte calcinierte Dolomit mit einem oberflächenmodifizierenden Behandlungsmittel oder Coatingmittel auf der Oberfläche ganz oder in Teilbereichen der Oberfläche überzogen ist,

Als Calcium- und/oder Zinkcarboxylate werden Salze von Calcium und/oder Zink mit Fettsäuren und/oder deren Derivate, vorzugsweise von zusätzlich polare Gruppen enthaltenden Fettsäuren, mit C₈ bis C₃₂, vorzugsweise C₁₀ bis C₂₂, eingesetzt. Bevorzugt werden C₁₅ bis C₂₁ Fettsäuren, deren Derivate und/oder Mischungen derselben, insbesondere auch zusätzliche polare Gruppen enthaltende Fettsäuren, verwendet. Als besonders geeignet erweisen sich Stearate, Hydroxystearate, Palmitate und/oder Behenate oder Fettsäuren oder Fettsäurederivate dieser Verbindungen, die zusätzliche polare Gruppen, vorzugsweise Hydroxylgruppen enthalten.

Nach einer bevorzugten Ausführungsform enthält die Formmasse zusätzlich
e. 0,01 bis 15 Gew.-Teile mindestens eines Füllstoffes, vorzugsweise mindestens eines anorganischen Füllstoffes.

Nach einer weiteren bevorzugten Ausführungsform enthält die Formmasse je 100 Gew.-Teile der PVC-Mischung oder des Vinylchloridmischpolymerisates, zusätzlich
f. 0,01 bis 5 Gew.-Teile mindestens eines äußeren Gleitmittels und/oder inneren Gleitmittels, und/oder
g. 0,01 bis 5 Gew.-Teile eines Verarbeitungshilfs- oder Zusatzmittels, vorzugsweise ausgewählt aus der Gruppe der polymeren Alkylmethacrylate,

Nach einer bevorzugten Ausführungsform der Erfindung sind je 100 Gew.-Teile des Kunststoffes oder Kunststoffgemisches zusätzlich
a. 0,05 bis 1,5 Gew.-Teile mindestens eines Calciumcarboxylates,
b. 0,05 bis 1,5 Gew.-Teile mindestens eines Zinkcarboxylates,
c. 0,05 bis 2 Gew.-Teile mindestens eines organischen Co-Stabilisators ausgewählt aus der Gruppe mindestens eines β-Diketons, organischen Phosphits und/oder Dihydropyridins,
d. 0,05 bis 1 Gew.-Teile Calciumoxid und/oder Magnesiumoxid,
e. 0,05 bis 10 Gew.-Teile mindestens eines Füllstoffes, vorzugsweise eines anorganischen Füllstoffes,
f. 0,5 bis 5 Gew.-Teile mindestens eines Pigmentes und/oder Farbstoffes, Gleitmittels und/oder inneren Gleitmittels,
g. 0,5 bis 3,5 Gew.-Teile eines Verarbeitungshilfs- oder Zusatzmittels, ausgewählt aus der Gruppe der polymeren Alkylmethacrylate, vorzugsweise Polymethylmethacrylat
in der Formmasse enthalten.

Als β-Diketon wird bevorzugt im Rahmen der Erfindung ein Benzoylstearoylmethan eingesetzt.

Als Phosphite werden bevorzugt Triphenylphosphit, Trilaurylphosphit, Diphenyldecylphosphit, Tridecylphosphit und/oder Phenyldidecylphosphit der Formmasse zugesetzt.

Nach einer bevorzugten Ausführungsform der Erfindung ist der Costabilisator, ausgewählt aus der Gruppe mindestens eines β-Diketons, organischen Phosphits und/oder Dihydropyridins bis zu 70 Gew.-% (bezogen auf 100 Gew.-% des eingesetzten Costabilisators), vorzugsweise bis zu 50 Gew.-% durch ein Polyol ersetzt. Der Anteil des Polyols sollte nach Möglichkeit unter 50 Gew.-%, besonders bevorzugt unter 40 Gew.-% (bezogen auf 100 Gew.-% des eingesetzten Costabilisators) liegen, um eine verbesserte Wärmestabilisierung der Formmasse zu erreichen.

Als Polyole werden bevorzugt Trimethylolpropan, Di-Trimethylolpropan, Pentaerythrit und Mischungen dieser Polyole untereinander oder mit anderen Polyolen eingesetzt. Nach einer weiteren Ausführungsform wird das zu einem gewissen Anteil als Costabilisator eingesetzte Polyol durch ein Polyether-Polyol ersetzt.

Nach einer anderen bevorzugten Ausführungsform enthält die Formasse zusätzlich je 100 Gew.-Teile der PVC-Mischung oder des Vinylchloridmischpolymerisates zusätzlich neben den bereits genannten Zusatzmitteln
h. 0,01 bis 10 Gew.-Teile, vorzugsweise 0,5 bis 5 Gew.-Teile,
   eines Pigmentes und/oder Farbstoffes und/oder
i. 0,05 bis 4 Gew.-Teile, vorzugsweise 0,1 bis 2 Gew.-Teile,
   mindestens eines Treibmittels und/oder
j. 0,5 bis 10 Gew.-Teile, vorzugsweise 1 bis 8 Gew.-Teile,
   mindestens eines Flammschutzmittels oder die Formmasse besteht daraus.

Als Treibmittel gelangen organisch-chemische und/oder anorganisch-chemische Treibmittel zum Einsatz, vorzugsweise solche, die in der Hitze Stickstoff oder Kohlendioxid abspalten. Bevorzugt gelangen Treibmittel aus der Gruppe der Azodicarbonamide und/oder Natriumbicarbonate zum Einsatz.

Als Flammschutzmittel werden die an sich für Kunststoffe bekannten Flammschutzmittel, vorzugsweise Aluminiumhydroxyd und/oder Antimontrioxyd, verwendet.

Wie bereits erwähnt, ist gemäß der Erfindung das Calciumoxid, Magnesiumoxid, teilhydratisierte Calciumoxid, teilhydratisierte Magnesiumoxid, der calcinierte Dolomit und/oder teilhydratisierte calcinierte Dolomit mit einem oberflächenmodifizierenden Behandlungsmittel oder Coatingmittel auf der Oberfläche ganz oder in Teilbereichen der Oberfläche überzogen und das oberflächenmodifizierende Behandlungsmittel oder Coatingmittel ist eine gesättige oder ungesättigte Fettsäure oder deren Ester, Salze oder Derivate.

Gemäß einer bevorzugten Ausführungsform der Erfindung sind sowohl der Füllstoff oder das Füllstoffgemisch oder ein Teil des Füllstoffes oder des Füllstoffgemisches als auch das Calciumoxid und/oder das Magnesiumoxid mit einem oberflächenmodifizierenden Behandlungsmittel oder Coatingmittel auf ihrer Oberfläche ganz oder in Teilbereichen überzogen und das oberflächenmodifizierendes Behandlungsmittel oder Coatingmittel ist eine gesättige oder ungesättigte Fettsäure oder deren Ester, Salze oder Derivate.

Die Oberflächenbehandlungsmittel oder Coatingmittel werden in Form einer Lösung, Dispersion, Schmelze und dgl. aufgebracht. Nach einer bevorzugten Ausführungsform wird auf das Erdalkalioxid oder teilhydratisierte Erdalkalioxid, vorzugsweise auf das Calciumoxid, Magnesiumoxid, teilhydratisierte Calciumoxid, teilhydratisierte Magnesiumoxid, auf den calcinierten Dolomit oder den teilhydratisierten, calcinierten Dolomit, das Oberflächenbehandlungs- oder Coatingmittel im heißen Zustand oder in Form einer Schmelze aufgebracht. Bevorzugt wird dazu ein Heißmischer oder eine Heißmischer-Kühlmischer-Kombination verwendet.

Die Aufbringung des Oberflächenbehandlungsmittels auf den Füllstoff erfolgt vorzugsweise in Form einer Dispersion oder Lösung des Oberflächenbehandlungsmittels oder Coatingmittels.

Gemäß einer bevorzugten Ausführungsform der Erfindung ist das Calciumoxid, Magnesiumoxid, teilhydratisierte Calciumoxid, teilhydratisierte Magnesiumoxid, der calcinierte Dolomit und/oder der teilhydratisierte calcinierte Dolomit mit einer gesättigten oder ungesättigten Fettsäure oberflächenmodifiziert, die zusätzlich neben der COOH-, Ester- und/oder COO-Gruppe mindestens eine OH-Gruppe oder mindestens eine andere polare Gruppe aufweist.

Nach einer weiteren bevorzugten Ausführungsform ist das Calcium- und/oder Magnesiumoxid und/oder der Füllstoff oder das Füllstoffgemisch oder ein Teil des Füllstoffes oder des Füllstoffgemisches, das vorzugsweise feinteiliges Calciumcarbonat enthält oder daraus besteht, mit mindestens einer gesättigten oder ungesättigten Fettsäure, deren Ester, Salze oder Derivate oberflächenmodifiziert, die zusätzlich neben der COOH-, Ester- und/oder COO-Gruppe mindestens eine OH-Gruppe oder mindestens eine andere polare Gruppe aufweist.

Als polare Gruppen enthaltende organische Carbonsäuren werden gesättigte und/oder ungesättigte Monocarbonsäuren oder Polycarbonsäuren, deren Derivate, substituierte Verbindungen und/oder Salze eingesetzt, die eine oder mehrere Hydroxylgruppe(n), Aminogruppe(n), Carbonylgruppe(n) und/oder Estergruppe(n) enthalten. Bevorzugt sind die Salze der Monocarbonsäuren, vorzugsweise der Fettsäuren, oder die Säuren selbst.

Bevorzugt werden die zusätzliche polare Gruppen aufweisenden Fettsäuren mit C₈ bis C₃₂, vorzugsweise C₁₀ bis C₂₂ eingesetzt, die vollständig aus gesättigten, mindestens eine zusätzliche polare Gruppe aufweisenden Fettsäure bestehen oder bis zu 20Gew.-%, vorzugsweise bis zu 6 Gew.-% eine ungesättigte, mindestens eine zusätzlich polare Gruppe aufweisenden Fettsäure enthalten. Bevorzugt werden die polare Gruppen enthaltenden Fettsäuren, vorzugsweise Hydroxylgruppen enthaltenden Fettsäuren oder Aminogruppen enthaltende Fettsäuren, vorzugsweise Hydroxystearinsäure, Hydroxypalmitinsäure, Hydroxyölsäure, Aminostearinsäure, Aminolinolsäure und/oder die Alkalisalze dieser Verbindung zur Oberflächenbehandlung der Füllstoffe und/oder von Magnesium- und/oder Calciumoxid eingesetzt.

Nach einer bevorzugten Ausführungsform wird ein synthetisches oberflächenbeschichtetes Calciumcarbonat als Füllstoff verwendet, vorzugsweise hergestellt durch Einleiten von Kohlendioxid in eine Calciumhydroxidsuspension und durch nachfolgende Oberflächenbehandlung des hergestellten Calciumcarbonates mit einem Alkali- oder Ammoniumsalz einer gesättigten oder ungesättigten, neben einer mindestens eine polare Gruppe enthaltenden Carbonsäure, Fettsäure oder substituierten Fettsäure, vorzugsweise mit einem Alkali- oder Ammoniumsalz mindestens eine Hydroxyl-, Carbonyl-, Amino- und/oder Estergruppe enthaltenden aliphatischen Monocarbonsäure oder Fettsäure. Dabei wird bei der Oberflächenbehandlung ganz oder teilweise die entsprechende Calciumverbindung dieser polare Gruppen enthaltenden Fettsäure auf der Oberfläche des Calciumcarbonates gebildet.

Die auf der Oberfläche des synthetischen Calciumcarbonates nach der Aufbringung des Behandlungsmittels gebildete Oberflächenschicht besteht bevorzugt aus einem Calcium- und/oder Alkalisalz, sowie ggf. Ammoniumsalz mindestens einer, mindestens eine Hydroxylgruppe enthaltenden Fettsäure mit C₁₀ bis C₂₂ oder enthält diese.

Nach einer weiteren Ausführungsform wird als Oberflächenbehandlungsmittel für die Füllstoffe und/oder für das Calciumoxid und/oder Magnesiumoxid (oder teilhydratisierte Verbindungen derselben) als ungesättigte Carbonsäure eine ein- oder mehrfach ungesättigte, vorzugsweise eine zweifach ungesättigte konjugierte oder nicht konjugierte Carbonsäure, vorzugsweise ein Alkalisalz derselben oder ein Ammoniumsalz einer ein- oder zweifach ungesättigten Carbonsäure, oder eine Mischung derselben eingesetzt, insbesondere Crotonsäure, 2-Pentensäure, 4-Pentensäure, 2-Hexensäure, 3-Hexensäure, 2,4-Pentadiensäure, 3-Butensäure und/oder 3-Methyl-Crotonsäure, vorzugsweise jedoch Sorbinsäure.

Nach einer bevorzugten Ausführungsform ist die ein- oder mehrfach ungesättigte Carbonsäure oder Carbonsäuren oder eine Mischung derselben, bis zu 60 Gew.-% (bezogen auf 100 Gew.-Teile der zur Oberflächenbehandlung eingesetzten Carbonsäuren), vorzugsweise bis zu 40 Gew.-%, durch eine neben den Carboxylgruppen eine polare Gruppen enthaltende gesättigte und/oder ungesättige Monocarbonsäure mit C₂ - C₃₂ und/oder Huminsäure (oder Humussäure), ersetzt.

Nach einer vorzugsweisen Ausführungsform der Erfindung ist das als Modifizierungsmittel verwendete Alkylacrylat, vorzugsweise Butylacrylat, bis zu 60 Gew.-% (bezogen auf 100 Gew.-Teile des eingesetzten Modifizierungsmittels), vorzugsweise bis zu 35 Gew.-%, durch Polymethylmethacrylat (PMMA) ersetzt.

Das in der Formmasse enthaltende Vinylchloridhomo-, -co- und/oder Terpolymerisat weist vorzugsweise einen K-Wert von 58 bis 73 auf. Besonders bevorzugt werden K-Werte von 64 bis 71 eingesetzt.

Die vorliegende Erfindung betrifft weiterhin ein Verfahren zur Herstellung der weichmacherfreien Formmasse.

Gemäß dem erfindungsgemäßen Verfahren werden die Kunststoffe und die Zusatzstoffe bei Temperaturen über 35 °C in einem Heißmischer vermischt und unter Temperatursteigerung auf Temperaturen zwischen 100 und 125 °C (berechnet als Massetemperatur), vorzugsweise 110 bis 120 °C, erhitzt. Anschließend wird die Formmasse in einem Kühlmischer auf Temperaturen unter 40°C, vorzugsweise unter 35 °C, abgekühlt.

Nach einer bevorzugten Ausführungsform wird der Kunststoff oder die Kunststoffmischung und die bei Umgebungstemperatur festen Zusatzstoffe (ausgenommen Titandioxid) bei 35 bis 50 °C, vorzugsweise 37 bis 45°C, in einem Heißmischer vorgemischt dazu die flüssigen Zusatzstoffe nach Temperaturerhöhung bei Erreichen einer Temperatur zwischen 55 bis 65 °C, vorzugsweise 57 bis 62 °C, zugemischt und nachfolgend unter Temperatursteigerung auf 100 bis 125 °C (berechnet als Massetemperatur), vorzugsweise 110 bis 120 °C, weiter gemischt. Anschließend wird die Formmasse in einem Kühlmischer auf Temperaturen unter 40 °C, vorzugsweise unter 35 °C, abgekühlt.

Bei der Verwendung von Titandioxid als Pigment erfolgt die Zugabe von Titandioxid zu der im Heißmischer vorgemischten Kunststoff-Zusatzmittel-Mischung im Bereich von 90 bis 125 °C (berechnet als Massetemperatur), vorzugsweise 110 bis 120 °C, und anschließend wird die Formmasse in einem Kühlmischer auf Temperaturen unter 40 °C, vorzugsweise unter 35 °C, abgekühlt.

Das Erdalkalioxid oder teilhydratisierte Erdalkalioxid, vorzugsweise Calciumoxid und/oder Magnesiumoxid, teilhydratisierte Calciumoxid und/oder teilhydratisierte Magnesiumoxid und/oder der calcinierte Dolomit oder teilhydratisierte, calcinierte Dolomit weist nach einer bevorzugten Ausführungsform eine mittlere Teilchengröße von unter 25 µm, vorzugsweise unter 5 µm, auf. Besonders bevorzugt werden mittlere Teilchengrößen zwischen 0,5 bis 4 µm eingesetzt.

Nach einer bevorzugten Ausführungsform beträgt die Gewichtsmenge des zur Oberflächenbehandlung eingesetzten Modifizierungsmittels oder Coatingmittels in Abhängigkeit von der Teilchengröße des Erdalkalioxides oder teilhydratisierten Erdalkalioxides, vorzugsweise des Calciumoxides, Magnesiumoxides und/oder teilhydratisierten Calciumoxides und/oder Magnesiumoxides 0,02 bis 4,5 Gew.-%, vorzugsweise 0,5 bis 2,5 Gew.-%, bezogen auf 100 Gew.-Teile Erdalkalioxid oder teilhydratisierten Erdalkalioxid.

Der Füllstoff oder das Füllstoffgemisch weist nach einer bevorzugten Ausführungsform eine mittlere Teilchengröße unter 10 µm, vorzugsweise unter 1 µm, auf. Nach einer bevorzugten Ausführungsform ist die mittlere Teilchengröße des eingesetzten Erdalkalioxides oder teilhydratisierten Erdalkalioxides mindestens doppelt so groß wie die mittlere Teilchengröße des Füllstoffes oder Füllstoffgemisches.

Die vorliegende Erfindung betrifft weiterhin die Verwendung der weichmacherfreien Formmasse. im Extrusionsverfahren oder Spritzgußverfahren zur Herstellung von Profilen oder Gegenständen oder Hohlkörpern, vorzugsweise extrudierten Fensterprofilen oder extrudierten Rohren.

Die aus den erfindungsgemaßen weichmacherfreien Formmassen hergestellten Formteile und Profile weisen eine sehr gute Oberflächenbeschaffenheit (eine gleichmäßige glatte Oberfläche) auf. Die Verarbeitungseigenschaften und Eigenschaften der Fertigteile oder der Profile einschließlich deren Nachbehandlung (wie z. B. Schneiden, Schweißen, Bohren, Sägen, Biegen und dgl.) ist vergleichbar oder verbessert gegenüber solchen Formteilen oder Profilen, die unter Verwendung von Barium-, Cadmium- oder bleihaltiger Verbindungen hergestellt sind.

### Beispiel 1

| | Gruppe | Gew.-Teile |
|---|---|---|
| Suspensions-Vinylchlorid-homopolymerisat (K-Wert 68) | | 100 |
| Polymethylmethacrylat (PMMA) | g | 1 |
| Talkum (mikronisiert) | e | 10 |
| Benzoylstearoylmethan | c | 0,1 |
| 1,4-Dihydropyridin | c | 0,2 |
| Diphenyldecylphosphit | c | 0,7 |
| Calciumstearat | a | 0,8 |
| Zinkoctoat | b | 0,4 |
| Calciumoxid, gecoatet mit 2 Gew.-% Hydroxystearinsäure (bezogen auf 100 Gew.-Teile Ca0) | d | 0,1 |
| Magnesiumoxid, gecoatet mit 2 Gew.-% Hydroxypalmitinsäure (bezogen auf 100 Gew.-Teile Mg0) | d | 0,15 |
| Gemisch aus inneren und äußeren Gleitmitteln unter Mitverwendung von Montanwachsen | f | 0,75 |
| Hartparaffin | f | 0,2 |
| partiell oxidiertes | f | 0,1 |
| Hartparaffin | | |

### Beispiel 2

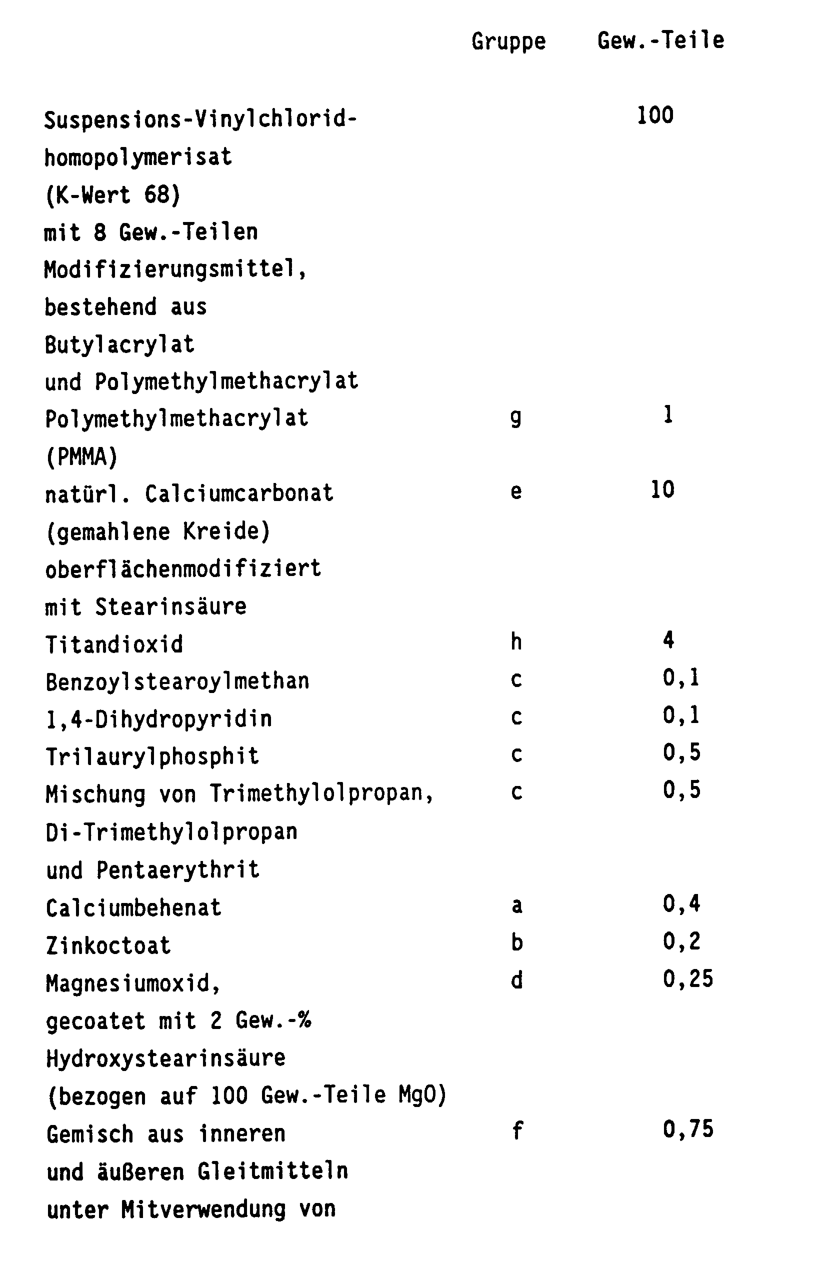

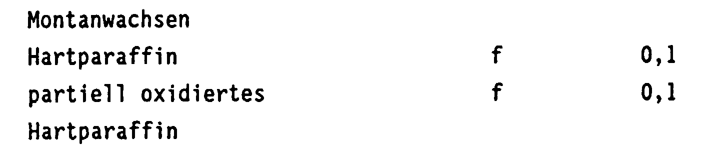

### Beispiel 3

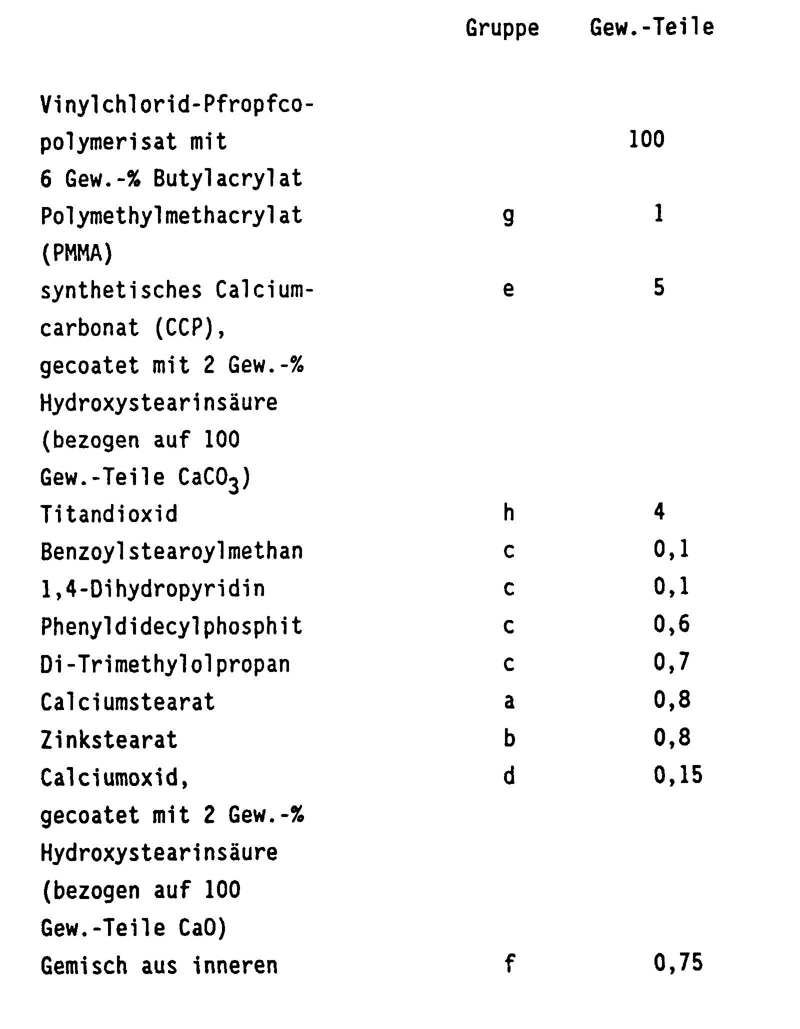

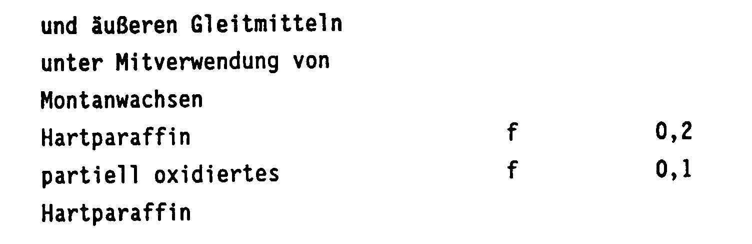

### Beispiel 4

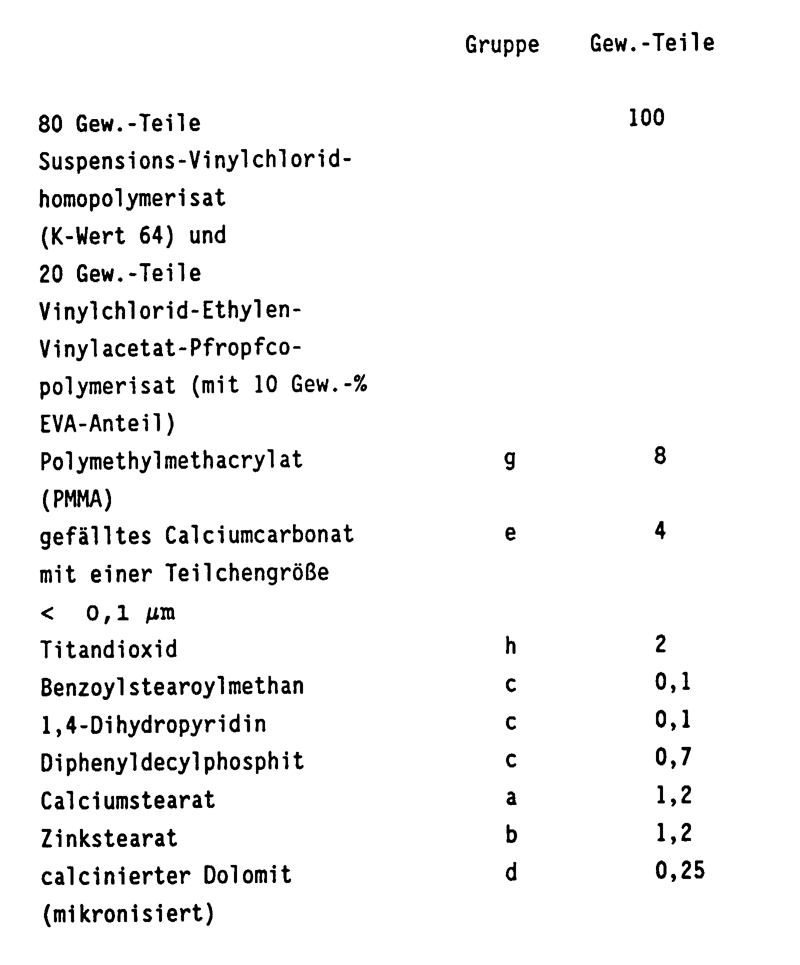

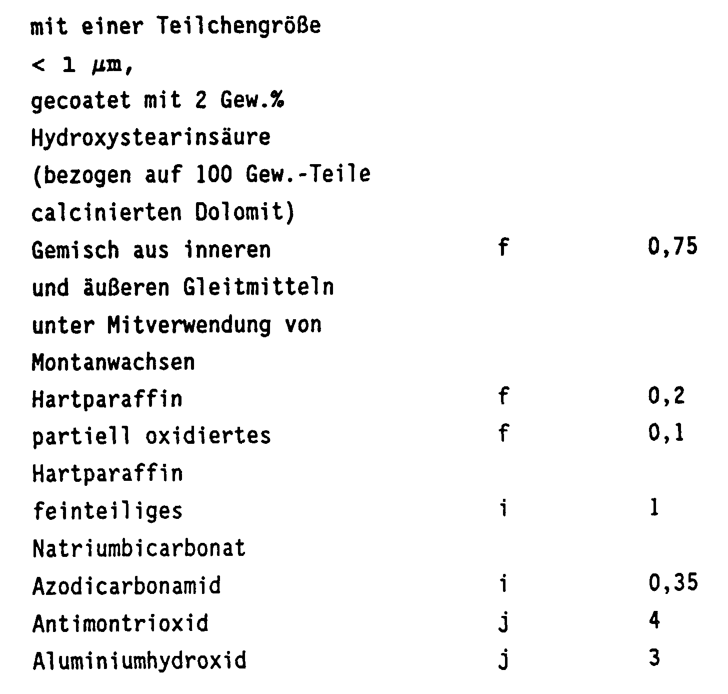

### Gruppen:

a = Calcium-Carboxylat
b = Zink-Carboxylat
c = Co-Stabilisatoren
d = Erdalkali-Oxid
e = Füllstoff
f = Gleitmittel
g = Verarbeitungshilfsmittel
h = Pigmente
i = Treibmittel
j = Flammschutzmittel

## Patentansprüche

1. Weichmacherfreie Formmasse auf der Basis von Polyvinylchlorid, enthaltend einen Kunststoff
aus Vinylchloridhomo-, -co-, -terpolymerisat, Mischungen davon oder Legierungen damit, mit einem VC- bzw. PVC-Gehalt von mehr als 70 Gew.-%, vorzugsweise mehr als 85 Gew.-%, bezogen auf den Kunststoff, und
0 bis 15 Gew.-%, bezogen auf den Kunststoff, eines schlagzähmodifizierenden Polymerisates, ausgewählt aus der Gruppe der Polyalkylacrylate, chlorierten Polyäthylene, Äthylen-Vinylacetat-co- oder Äthylen-Vinylacetat-Kohlenmonoxid-Terpolymerisate;
und je 100 Gew.-Teile dieses Kunststoffes
a) 0,01 bis 3 Gew.-Teile mindestens eines Calciumcarboxylates,
b) 0,01 bis 3 Gew.-Teile mindestens eines Zinkcarboxylates,
c) 0,01 bis 3 Gew.-Teile mindestens eines organischen Co-Stabilisators, ausgewählt aus der Gruppe mindestens eines β-Diketons, organischen Phosphits und/oder Dihydropyridins,
und gegebenenfalls Pigmente, Farbstoffe, Gleitmittel, Treibmittel, Flammschutzmittel, Füllstoffe, Verstärkungsfasern oder andere Verarbeitungshilfs- und Zusatzmittel,
dadurch gekennzeichnet, daß
d) 0,01 bis 5 Gew.-Teile mindestens eines Erdalkalioxides, eines Erdalkalihydroxides und/oder eines teilhydratisierten Erdalkalioxides, vorzugsweise Calciumoxid und/oder Magnesiumoxid, und/oder teilhydratisiertes Calciumoxid und/oder teilhydratisiertes Magnesiumoxid und/oder calcinierter Dolomit oder teilhydratisierter calcinierter Dolomit, wobei das Erdalkalioxid, Erdalkalihydroxid und/oder teilhydratisierte Erdalkalioxid, vorzugsweise das Calciumoxid und/oder Magnesiumoxid, und/oder das teilhydratisierte Calciumoxid und/oder teilhydratisierte Magnesiumoxid und/oder der calcinierte Dolomit mit einem oberflächenmodifizierenden Behandlungsmittel oder Coatingmittel auf der Oberfläche ganz oder in Teilbereichen der Oberfläche überzogen ist,
in der weichmacherfreien Formmasse enthalten sind.

2. Weichmacherfreie Formmasse nach Anspruch 1, dadurch gekennzeichnet, daß 0,01 bis 15 Gew.-Teile Füllstoff, vorzugsweise anorganischer Füllstoff enthalten sind.

3. Weichmacherfreie Formmasse nach Anspruch 1 und 2, dadurch gekennzeichnet, daß der Füllstoff oder das Füllstoffgemisch oder ein Teil des Füllstoffes oder des Füllstoffgemisches mit einem oberflächenmodifizierenden Behandlungsmittel oder Coatingmittel auf ihrer Oberfläche ganz oder in Teilbereichen überzogen ist.

4. Weichermacherfreie Formmasse nach Anspruch 1 bis 3, dadurch gekennzeichnet, daß das oberflächenmodifizierende Behandlungs- oder Coatingmittel eine gesättigte oder ungesättigte Fettsäure oder deren Ester, Salze oder Derivate ist, die zusätzlich neben der COOH-, Ester- und/oder COO-Gruppe mindestens eine OH-Gruppe oder mindestens eine andere polare Gruppe aufweist.

5. Weichmacherfreie Formmasse nach Anspruch 1 bis 4, dadurch gekennzeichnet, daß das in der Formmasse enthaltende Vinylchlorid-homo-, -co- und/oder -terpolymerisat einen mittleren K-Wert von 58 bis 73, vorzugsweise 64 bis 71, aufweist.

6. Verfahren zur Herstellung einer weichmacherfreien Formmasse nach Anspruch 1 bis 5, dadurch gekennzeichnet, daß der oder die Kunststoff(e) und die anderen Zusatzstoffe bei Temperaturen über 35 °C in einem Heißmischer vermischt werden und unter Temperatursteigerung auf Temperaturen zwischen 100 und 125 °C (berechnet als Massetemperatur), vorzugsweise 110 bis 120 °C, erhitzt und anschließend die Formmasse in einem Kühlmischer auf Temperaturen unter 40 °C, vorzugsweise unter 35 °C, abgekühlt wird.

7. Verfahren nach Anspruch 6, dadurch gekennzeichnet, daß der Kunststoff und die festen Mischungsbestandteile (ausgenommen TiO₂) bei 35 bis 50 °C, vorzugsweise bei 37 bis 45 °C, vorgemischt werden und nach Temperaturerhöhung auf 55 bis 65 °C, vorzugsweise bei 57 bis 62 °C, die flüssigen Zusatzstoffe zugemischt werden.

8. Verfahren nach Anspruch 6 und 7, dadurch gekennzeichnet, daß die Zugabe von TiO₂ zu der im Heißmischer vorgemischten Kunststoffzusatzmittel-Mischung bei Temperaturen von 90 bis 125 °C, vorzugsweise 110 bis 120 °C erfolgt.

9. Verwendung einer weichmacherfreien Formmasse nach Anspruch 1 bis 5, im Extrusions- oder Spritzgußverfahren zur Herstellung von Profilen oder Gegenständen, vorzugsweise Fensterprofilen oder extrudierten Rohren.

## Claims

1. A plasticiser-free moulding compound on the basis of polyvinyl chloride, containing a plastics material
consisting of vinyl chloride homopolymer, copolymer, terpolymer, mixtures thereof or compounds therewith, having a VC or PVC content of more than 70% by weight, preferably more than 85% by weight, relative to the plastics material, and
0 to 15% by weight, relative to the plastics material, of an impact-modifying polymer, selected from the group of polyalkyl acrylates, chlorinated polyethylenes, ethylene-vinyl acetate copolymers or ethylene/vinyl acetate/carbon monoxide terpolymers,
and, per 100 parts by weight of this plastics material,
a) 0.01 to 3 parts by weight of at least one calcium carboxylate,
b) 0.01 to 3 parts by weight of at least one zinc carboxylate,
c) 0.01 to 3 parts by weight of at least one organic co-stabiliser, selected from the group of at least one β-diketone, organic phosphite and/or dihydropyridine,
and optionally pigments, dyes, lubricants, blowing agents, flame retardants, fillers, reinforcing fibres or other processing aids and additives,
characterised in that
d) 0.01 to 5 parts by weight of at least one alkaline earth oxide, alkaline earth hydroxide and/or partly hydrated alkaline earth oxide, preferably calcium oxide and/or magnesium oxide, and/or partly hydrated calcium oxide and/or partly hydrated magnesium oxide and/or calcined dolomite or partly hydrated calcined dolomite, with the alkaline earth oxide, alkaline earth hydroxide and/or partly hydrated alkaline earth oxide, preferably the calcium oxide and/or magnesium oxide, and/or the partly hydrated calcium oxide and/or partly hydrated magnesium oxide and/or the calcined dolomite being coated on the entire surface or in partial regions of the surface with a surface-modifying treatment agent or coating agent,
are contained in the plasticiser-free moulding compound.

2. A plasticiser-free moulding compound according to Claim 1, characterised in that it contains 0.01 to 15 parts by weight filler, preferably inorganic filler.

3. A plasticiser-free moulding compound according to Claim 1 and 2, characterised in that the filler or the filler mixture or a portion of the filler or of the filler mixture is coated on its surface completely or in partial regions with a surface-modifying treatment agent or coating agent.

4. A plasticiser-free moulding compound according to Claims 1 to 3, characterised in that the surface-modifying treatment agent or coating agent is a saturated or unsaturated fatty acid or esters, salts or derivatives thereof, which additionally contains at least one OH group or at least one other polar group in addition to the COOH, ester and/or COO group.

5. A plasticiser-free moulding compound according to Claims 1 to 4, characterised in that the vinyl chloride homopolymer, copolymer and/or terpolymer contained in the moulding compound has an average K value of 58 to 73, preferably 64 to 71.

6. A method for preparing a plasticiser-free moulding compound according to Claims 1 to 5, characterised in that the plastics material(s) and the other additives are mixed in a hot mixer at temperatures above 35°C and are heated with a temperature increase to temperatures between 100 and 125°C (calculated as compound temperature), preferably 110 to 120°C, and then the moulding compound is cooled in a cooling mixer to temperatures below 40°C, preferably below 35°C.

7. A method according to Claim 6, characterised in that the plastics material and the solid mixture constituents (with the exception of TiO₂) are pre-mixed at 35 to 50°C, preferably at 37 to 45°C, and the liquid additives are admixed after a temperature increase to 55 to 65°C, preferably at 57 to 62°C.

8. A method according to Claims 6 and 7,
characterised in that the addition of TiO₂ to the plastics material/additive mixture pre-mixed in the hot mixer is effected at temperatures of 90 to 125°C, preferably 110 to 120°C.

9. The use of a plasticiser-free moulding compound according to Claims 1 to 5 in extrusion or injection-moulding processes for the production of profiles or articles, preferably window profiles or extruded tubes.

## Revendications

1. Masse de moulage exempte de plastifiant à base de polychlorure de vinyle contenant une matière plastique formée de
un homo-, co-, terpolymère de chlorure de vinyle, des mélanges de ceux-ci ou des alliages de ceux-ci avec une teneur en VC ou en PVC supérieure à 70% en poids , de préférence, supérieure à 85% en poids, rapportée à la matière plastique, et
de 0 à 15% en poids rapportés à la matière plastique d'un polymère modifiant la résilience choisi dans le groupe constitué des polyacrylates d'alkyles, des polyéthylènes chlorés, des copolymères d'éthylène et d'acétate de vinyle ou des terpolymères d'éthylène-acétate de vinyle-monoxyde de carbone;
et, pour 100 parties en poids de cette matière plastique,
a) de 0,01 à 3 parties en poids d'au moins un carboxylate de calcium,
b) de 0,01 à 3 parties en poids d'au moins un carboxylate de zinc,
c) de 0,01 à 3 parties en poids d'au moins un stabilisant organique de Co choisi dans le groupe formé d'au moins une β-dicétone, un phosphite organique et/ou de la dihydropyridine
et, éventuellement, des pigments, des colorants, des lubrifiants, des agents moussants, des agents ignifuges, des charges, des fibres de renforcement ou d'autres adjuvants et additifs de traitement,
caractérisée en ce que
d) de 0,01 à 5 parties en poids d'au moins un oxyde alcalino-terreux, un hydroxyde alcalino-terreux et/ou un oxyde alcalino-terreux partiellement hydraté et, de préférence, d'oxyde de calcium et/ou d'oxyde de magnésium et/ou d'oxyde de calcium partiellement hydraté et/ou d'oxyde de magnésium partiellemnt hydraté et/ou de dolomite calcinée ou de dolomite calcinée partiellement hydratée, dans lequel l'oxyde alcalino-terreux, l'hydroxyde alcalino-terreux et/ou l'oxyde alcalino-terreux partiellement hydraté et, de préférence, l'oxyde de calcium et/ou l'oxyde de magnésium et/ou l'oxyde de calcium partiellement hydraté et/ou l'oxyde de magnésium partiellement hydraté et/ou la dolomite calcinée est revêtu, sur toute sa surface ou sur une partie de celle-ci, par un agent de traitement modifiant la surface ou un agent d'enduction
sont contenus dans la masse de moulage exempte de plastifiant.

2. Masse de moulage exempte de plastifiant selon la revendication 1, caractérisée en ce qu'elle contient de 0,01 à 15 parties en poids de matières de charge et, de préférence, de charge inorganique.

3. Masse de moulage exempte de plastifiant selon la revendication 1 et 2, caractérisée en ce que la charge ou le mélange de charge ou une partie de la charge ou du mélange de charge est revêtue, sur toute sa surface ou sur une partie de celle-ci, par un agent de traitement modifiant la surface ou un agent d'enduction.

4. Masse de moulage exempte de plastifiant selon les revendications 1 à 3, caractérisée en ce que l'agent de traitement modifiant la surface ou l'agent d'enduction est un acide gras saturé ou insaturé ou ses esters, sels ou dérivés, qui présente, outre les groupes COOH, ester et/ou COO, au moins un groupe OH ou au moins un autre groupe polaire.

5. Masse de moulage exempte de plastifiant selon les revendications 1 à 4, caractérisée en ce que l'homo- le co- et/ou le terpolymère de chlorure de vinyle contenu dans la masse de moulage a une valeur K moyenne de 58 à 73 et, de préférence, de 64 à 71.

6. Procédé de préparation d'une masse de moulage exempte de plastifiant selon les revendications 1 à 5, caractérisé en ce que la ou les matière(s) plastique(s) et les autres additifs sont mélangés à des températures supérieures à 35°C dans un mélangeur chauffé et sont chauffés avec augmentation de température, entre 100 et 125°C (calculée comme température de masse) et, de préférence, entre 110 et 120°C, et que la masse de moulage est refroidie ensuite dans un mélangeur refroidi à des températures inférieures à 40°C, de préférence, inférieures à 35°C.

7. Procédé selon la revendication 6, caractérisé en ce que la matière plastique et les constituants solides du mélange (excepté TiO₂) sont prémélangés entre 35 et 50°C et, de préférence, entre 37 et 45°C et que, après augmentation de la température entre 55 et 65°C, de préférence entre 57 et 62°C, les additifs liquides y sont mélangés.

8. Procédé selon les revendications 6 et 7, caractérisé en ce que l'addition de TiO₂ au mélange, prémélangé dans le mélangeur chauffé, de matière plastique et d'additif s'effectue à des températures entre 90 et 125°C, de préférence, entre 110 et 120°C.

9. Utilisation d'une masse de moulage exempte de plastifiant selon les revendications 1 à 5, dans un procédé d'extrusion ou de moulage par injection pour la fabrication de profilés ou d'objets et, de préférence, de profilés de fenêtres ou de tubes extrudés.
